# EUROPEAN PATENT APPLICATION

(11) **EP 0 816 112 A2**
(43) Date of publication of application: **07.01.1998**
(21) Application number: 97108752.3
(22) Date of filing: 02.06.1997
(51) Int. Cl.: B41M 3/00, B41M 1/40, B41N 10/02

(54) **Method and apparatus for printing color filters**

(30) Priority: 02.07.1996 US 675359
(71) Applicant: CORNING INCORPORATED, Corning, N.Y. 14831 (US)
(72) Inventor: Ford, Clarence Edward, Jr., SP FR 02-12, Corning, NY 14831 (US); Johnson, Ronald Edgar, SP FR 02-12, Corning, NY 14831 (US); Monahan, Beth Costello, SP FR 02-12, Corning, NY 14831 (US); Semanchik, Susan Marie, SP FR 02-12, Corning, NY 14831 (US); Powell, William Robert, SP FR 02-12, Corning, NY 14831 (US); Shoup, Robert Donald, SP FR 02-12, Corning, NY 14831 (US)
(74) Representative: Boon, Graham Anthony

(57) **Abstract**

A collector device for printing high precision multicolored patterns, especially useful for printing color filter patterns for flat panel displays. The collector has a cushioning layer and a layer of higher modulus material over the cushioning layer.

## Description

The present invention relates to collector devices for ink printing processes, particularly an ink printing process for forming color filter patterns for liquid crystal display panels (LCD's).

### Background of the Invention

Corning Incorporated has recently developed several printing concepts which are useful for printing color filter patterns for flat panel display applications. Some of these concepts and their respective processes are disclosed in co-pending and commonly owned PCT Application PCT/US94/12679.

For example, a multi-colored color filter array pattern is deposited onto a transfer layer which is supported on a collector. An optional black matrix pattern may be deposited on the transfer layer prior to the color array to help separate the colored pixels from one another. The resultant composite, which consists of the transfer layer, multi-colored pixel dots, and optionally a black matrix pattern is then transferred onto the glass substrate. During transfer of the multicolored ink pattern to the substrate, the ink is preferably compressed between the collector and substrate and cured simultaneous with the compression transfer (i.e., "compression curing"). The color pixel ink pattern adheres to the glass substrate, causing the transfer layer to release from the collector roll surface and effect a deposition of the transfer layer/color filter pattern composite to the substrate. The adhesive strength of the transfer layer to the substrate and the cohesive strength of the transfer layer must be higher than the adhesive strength of the transfer layer material to the collector to enable the transfer layer to pull itself off of the collector.

Collector and transfer rolls in the printing arts have widely employed silicone based materials as the ink carrying material. A number of color filter manufacturers have likewise employed such silicone materials in their printing process. One potential inherent disadvantage to utilizing silicone containing materials in color filter applications occurs because of the nature of such silicone containing materials to exude silicone oil. In color filter applications, this can be a problem because of contamination. In particular, ultra-thin layers of oil can transfer with each release cycle such that the surface of the transferred layer will be detrimentally effected for any subsequent coatings, adhesives and so forth needed to attain good adhesion. This can be a particular problem for adhesion of the conductive layer (typically indium-tin oxide) which is deposited over the planarizing layer.

It would be desirable to design an improved collector and ink pattern transfer device which is non-silicone based, and which is suitable for printing color filters for flat panel display applications, such as liquid crystal displays. Such collector devices would ideally be suitable for use in Corning Incorporated's "transfer layer" printing process described above for manufacturing color filter arrays for liquid crystal display panels.

### Summary Of the Invention

One aspect of the present invention relates to a collector design which consists of a cushioning material and a layer over said cushioning material which has a higher modulus of elasticity than said cushioning material. The collectors of the present invention are especially useful for forming precision printed patterns, e.g. for forming color filter patterns onto substrates for use in flat panel displays.

The cushioning material preferably comprises a modulus of elasticity less than 1000, more preferably less than 300, and most preferably less than 100 psi. The cushioning material is preferably a castable elastomer, such as a butyl rubber, silicone, polysulfide, or polyurethane based material.

The higher modulus layer preferably consists of a modulus of elasticity greater than 100,000, more preferably greater than one million (1,000,000), and most preferably greater than 10 million (10,000,000) psi. The higher modulus layer could be, for example, a film selected from the group consisting of metal films or foils, or polymeric films or coatings, such as, for example, polyethylene terephthalate (PET), or combinations thereof. Examples of suitable metal foils include steel foils as well as Invar alloy foils. In embodiments where a low coefficient of thermal expansion is desired, Invar foils are particularly preferred materials.

The higher modulus outer layer of the collector device can further be improved by depositing a hard coat material thereon, such as a material selected from the group consisting of tin oxide, indium oxide, aluminum oxide, zirconium oxide, boron nitride, boron carbide, molybdenum disulfide, carbon nitride, silicon dioxide, diamond-like carbon (DLC) and mixtures thereof. The hard coat material preferably has a hardness greater than 100 Kg/mm² (about 1 GPa), more preferably greater than 200 Kg/mm² (about 2 GPa). Preferred hardcoat materials which provide such hardness include diamond-like coating (DLC), silica (SiO₂), and variations thereof. If needed or desired, an interlayer material may be employed to increase adhesion of the hard coat to the higher modulus layer.

In the most preferred embodiment of the invention, a castable butyl rubber elastomer is applied onto a cylindrical collector substrate, after which a metal foil such as steel or Invar foil is attached to the elastomer surface. A film of PET is applied via an adhesive on top of the metal foil. Then, on top of the PET, a silica film is deposited to provide a hard surface. In this embodiment, the PET together with the metal foil forms the higher modulus layer. PET is employed in addition to the metal foil to provide a radiation transparent surface to facilitate curing of the black matrix pattern while being deposited thereto. By employing a reflective surface behind the PET. The transparent PET enables UV or other curing radiation emitted through the ink and black matrix and transfer layer to be reflected off the reflective surface, back through the PET where it interacts again with the rear of the black matrix pattern, thereby enabling a more complete and uniform cure of the black matrix pattern on the collector. The collector device may be any shape, e.g., a collector roll or a flat collector plate.

Another aspect of the present invention relates to a method of forming a color filter for a flat panel display, utilizing the collector devices described above.

The collectors of the present invention and the methods utilizing them result in a number of advantages over prior art devices and methods, in particular improved registration. The higher modulus layer material provides a hard surface from which to deposit the ink to the substrate, while the cushioning material helps alleviate any misregistration which would otherwise occur due to nonuniform speed transfers between the collector and the substrate imperfections in the flatness of the substrate, and so forth. This is particularly advantageous in processes wherein the pattern being deposited is cured during the deposition step, as such processes achieve an enhanced "coupling" of the substrate to the collector by the cured ink as it is being transferred. As this happens, the cushioning layer flexes to allow such coupling to occur without damaging the deposited pattern, even if there is imperfect speed matching between the substrate and collector or poor substrate flatness.

### Brief Description of the Drawings

FIGURES 1A and 1B illustrate alternative collector configurations in accordance with the present invention.

FIGURE 2 illustrates a method and apparatus which utilizes a collector in accordance with the invention.

FIGURE 2A illustrates an enlarged view of the area contained in the circled dotted line of Fig. 2.

FIGURE 3 illustrates a process for depositing a color filter ink pattern onto a substrate.

### Detailed Description of the Invention

One aspect of the present invention relates to a collector device which is useful for depositing multicolored patterns onto substrates for use in flat panel displays. The collector device of the present invention consists of a cushioning material and a layer over said cushioning material which has a higher modulus of elasticity than said cushioning material (hereinafter the higher modulus layer).

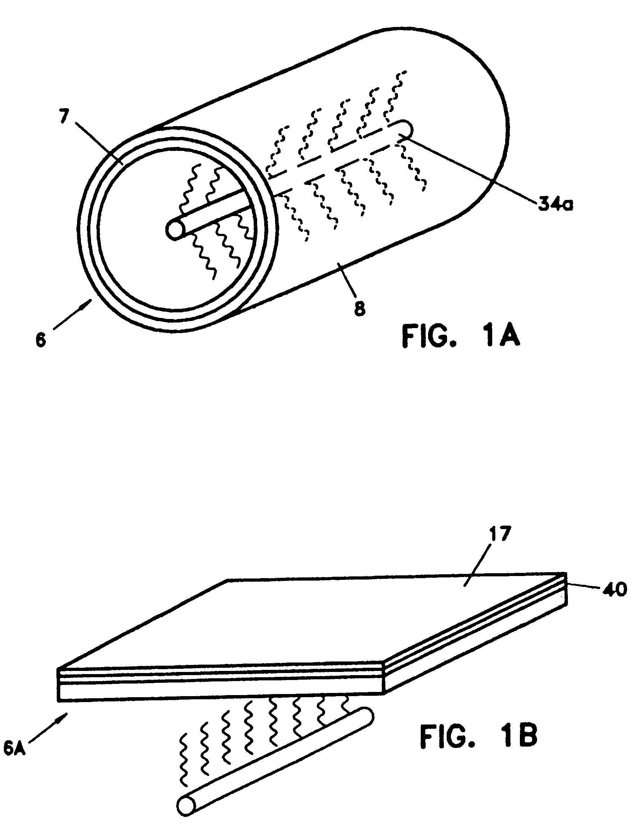

Figs. 1A and 1B illustrate a collector device 6 in accordance with the present invention, in which a layer of cushioning material 7 is provided under a layer of higher modulus material 8. It should be noted that, to facilitate explanation of the present invention, none of the drawings discussed herein are necessarily of realistic comparative dimensions. By higher modulus, it is meant that the modulus of the material 8 is higher than the modulus of the cushioning material 7.

The cushioning material preferably comprises a modulus of elasticity less than 1000, more preferably less than 300, and most preferably less than 100 psi. The cushioning material 7 could be, for example, an elastomeric material, such as butyl rubber, polyurethane, silicone, polysulfide, and so forth. Preferred elastomeric materials include foam materials. One preferred family of elastomeric materials are urethane based materials.

The higher modulus layer preferably consists of a modulus of elasticity greater than 100,000, more preferably greater than 1 million (1,000,000), and most preferably greater than ten million (10,000,000) psi. The higher modulus layer 8 could be, for example, a film selected from the group consisting of metal films or foils, polyethylene terephthalate (PET) films, fluorocarbon films (e.g. Tefzel, Tedlar, Halar, polymethylpentene and so forth), or combinations thereof. The preferred materials for the higher modulus layer 8 are the metal foils, such as steel or Invar foils. In a preferred embodiment the higher modulus material is transparent to a radiation which is utilized to cure inks while retained thereon. Also, the higher modulus material is preferably resistant to degradation caused by such radiation. In addition, the higher modulus material has very good flatness properties. Consequently, PET is a preferred material for this application, because of its ready availability in film form.

The higher modulus outer layer of the collector device can further be improved by depositing a hard coat material 9 thereon which has a hardness greater than that of the higher modulus layer 8. Preferably, the outer most material, upon which the inks are deposited, has a hardness which is greater than 1 GPa, more preferably greater than 2 GPa. The surface energy of the outer most layer on the collector is preferably between about 24 and 36 dynes/cm, more preferably between about 28 and 34 dynes/cm. This may be achieved by employing a higher modulus material having such a hardness level and/or surface tension level. Alternatively, a coating having one or more of these properties may be deposited over the higher modulus layer 8.

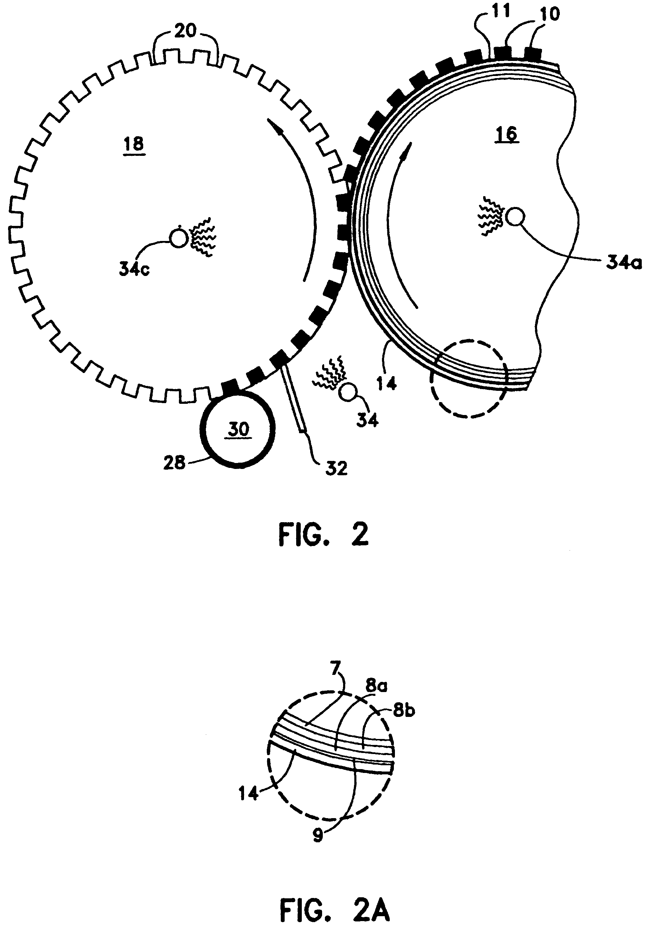

In a preferred embodiment illustrated in Fig. 2, collector roll 6 consists of core material 16, which can be any solid, rigid or hollow transfer material. On top of core material 16, a compressible elastomer material is used as cushioning layer 7. This elastomer is attached to the core material 16 via a suitable adhesive. The compressible material helps compensate for substrate dimensional variations. A higher modulus material 8 is then deposited over the elastomeric cushioning layer 7. This again may be done using an adhesive if needed. In the embodiment illustrated in Fig. 2, the high modulus layer 8 actually consists of components 8A and 8B. Layer 8A is a transparent material, such as PET, and 8B is a metal foil.

On top of the outer most layer of high modulus layer 8 (in this case PET film 8A), a hard coat material 9 is deposited to improve the hardness of the high modulus layer 8. The hard coat material could be, for example, a material selected from the group consisting of tin oxide, indium oxide, aluminum oxide, zirconium oxide, boron nitride, boron carbide, molybdenum disulfide, carbon nitride, silicon dioxide, diamond-like carbon (DLC) and mixtures thereof. The hard coat material preferably has a hardness greater than 100 Kg/mm² (about 1 GPa), more preferably greater than 200 Kg/mm² (about 2 GPa). Preferred materials which provide such hardness include diamond-like coating (DLC) and silica (SiO₂) are preferred hard coat materials for the collector of the present invention. If needed or desired, an interlayer material may be employed to increase adhesion. Diamond-like carbon (DLC) and silica (SiO₂) are preferred hard coat materials for the collector of the present invention. "Diamond-like carbon" is meant to include any of the carbon based materials whose properties resemble those of diamond, including, for example, those carbon based materials having at least a partially hexagonal crystal structure, as well as amorphous carbon structures. Another preferred hard coat material in accordance with the invention are the diamond-like nanocomposite (DLN) coatings which are manufactured and available, for example, from Advanced Refractory Technologies, Inc., Hertel Avenue, Buffalo, N.Y., U.S.A.. DLN coatings, as used herein, refer to coatings which consist of a mixture of amorphous random networks of C-H and Si-O networks which interpenetrate one another. Metal dopants may be added to these networks to vary the properties as desired.

If radiation is emitted from within the collector roll 6, the layers 7, 8, and 9 should be transparent to the radiation (typically about 300-450 nm). Figure 1A illustrates this embodiment on a collector roll 6, while Fig. 1B illustrates this embodiment on a flat collector plate 6A. The main support structure for each of these collector devices can be constructed of conventional materials, such as, for example, aluminum metal.

One preferred combination of materials for the collector employs a layer 7 of elastomeric materials between about .010 and .500 inches thick, more preferably between about .020 and .100 inches thick, and most preferably about .040 inches thick. This elastomeric layer is combined with a high modulus layer 8 between about .001 and .040 inches thick, more preferably about .003 and .010 inches thick.

The collectors of the present invention are particularly useful in a transfer layer type printing process which was developed by Corning Incorporated to print color filters. In one embodiment of this process, a transfer layer is deposited onto a collector device, such as a collector roll or collector plate. The red, green and blue color dot patterns are deposited on the transfer layer, and the resultant composite, which consists of the transfer layer and color cells, is transferred in one step to the glass substrate. Prior to receiving the color dot patterns, a black matrix pattern is preferably deposited onto the transfer layer. This process is further discussed in above mentioned PCT Application PCT/US94/12679, and in PCT/US95/1714.

Fig. 2 illustrates utilization of a preferred collector in accordance with the invention. In Fig. 2, black matrix pattern 10 is formed on a transfer layer 14 which is carried by collector roll 6. The transfer layer may be formed using, for example, those materials selected from the group consisting of polyimides, epoxides, acrylics, vinyl ethers, polyurethanes, polyesters, and acrylated or methacrylated acrylics, esters, urethanes, or epoxides, and other materials which are commonly employed as planarizing layers in conventional color filter devices. A preferred material for the transfer layer is a radiation curable acrylate material, such as a radiation curable epoxy acrylate. The transfer layer is deposited onto a collector device as a thin film, typically less than 10 microns. Preferably, the transfer layer is formed of a radiation curable material to facilitate curing. In such cases, the majority of the transfer layer is cured while receiving the ink patterns which make up the black matrix and color filter patterns.

Intaglio roller 18 is used as a black matrix ink patterning roll, in that it has an ink receiving recessed pattern 20 thereon which receives radiation curable, thermal wax, or solvent based black matrix ink 28. Alternatively, intaglio roller 18 could be replaced by a flat intaglio plate. Ink applicating roller 30 applies radiation curable black matrix ink 28 into recessed pattern 20. Excess ink is removed from the pattern 20 by doctor blade 32. The ink is then cured or set within recessed pattern 20, such as, for example, by exposure to ultraviolet radiation from UV lamp 34, thereby forming a black matrix pattern 10 which will at least substantially retain the shape of the recessed pattern 20. Alternatively, in a preferred embodiment UV light 34C is utilized to cure both the black matrix and transfer layer 14, preferably at least some of the curing taking place during the transfer of the black matrix pattern 10 to transfer layer 14. The curing of black matrix pattern 10 via UV light 34C is facilitated by the construction of the high modulus layer 8, in particular layers 8A and 8B, as PET layer 8A enables radiation to transmit through PET layer 8A, where it is reflected back from metal foil 8B, thereby enabling radiation to contact the rear-side of black matrix pattern 10 (relative to UV light 34C).

Preferably, an additional hard coat material 9, such as, for example, a vapor deposited SiO₂, is deposited over the PET layer. The steel foil layer serves both to impart a rigidity to the structure, as well as a reflective surface. Consequently, when a curing radiation is emitted from radiation source 34C, it travels through the black matrix grid pattern 10 and transfer layer 14, through hard coat layer 9 and higher modulus layer 8A, where it is reflected back from steel foil layer 8B back through the higher modulus layer 8A and hard coat layer 9 and back into the transfer layer and black matrix pattern 10. This process thus improves the uniformity of curing of the black matrix pattern, enabling the radiation to interact with both sides of the black matrix pattern. Alternatively, the steel foil layer 8B could conceivably be omitted and a reflective coating employed on the rear surface of the PET. Such a reflective coating would likewise serve to improve exposure of the radiation to transfer layer 14 more effectively behind the black matrix pattern areas. An example of a suitable reflective coating could be, for example, a metallic coating applied using physical or chemical vapor deposition techniques.

Alternatively, as illustrated in Fig. 2, the black matrix ink and/or transfer layer 14 could be cured by radiation from UV light 34A, located within collector roll 6. To enable this to occur, layers 7, 8, and 9 must be constructed of transparent material. When the curing or hardening of the black matrix ink is accomplished, the black matrix pattern 10 will retain the exact shape of recessed pattern 20. Black matrix patterning roller 18 is contacted with transfer layer 14 to transfer the cured or otherwise hardened black matrix pattern 10 from recessed pattern 20 of patterning roller 18 to transfer layer 14 on collector roll 6.

Transfer layer 14 may be applied using conventional ink-type applicating rollers. While transfer layer 14 may be partially cured prior to receiving the black matrix pattern, transfer layer 14 preferably is liquid and smooth prior to contacting the black matrix pattern. Ink in intaglio and gravure print plates typically has a negative meniscus, the surface of the ink curving below the print plate surface. Consequently, the transfer layer preferably is either liquid or sufficiently soft and tacky to adhere to the black matrix ink and remove the ink from the recesses of the intaglio print pattern. The portion of the transfer layer that contacts the black matrix (i.e., corresponding to the entire functional area of the color filter) is preferably cured during the transfer of the black matrix pattern to transfer layer 14. Such curing may be accomplished by utilizing ultraviolet radiation curable material to form transfer layer 14, and applying radiation, via ultraviolet (UV) light 34A, to transfer layer 14 during deposition of the black matrix pattern 10 to transfer layer 14. It should be noted that the radiation employed does not have to be ultraviolet, but could instead be visible, infrared, or other radiation, depending on the photoinitiator employed for the transfer layer.

In Fig. 2, after transfer layer 14 has been applied to collector roll 6, the color inks which make up the color filter pattern are applied to transfer layer 14 in this black matrix pattern 10. Preferably, each one of the three colored ink patterns (typically red, green, and blue) are applied using typographic applicating rolls or plates.

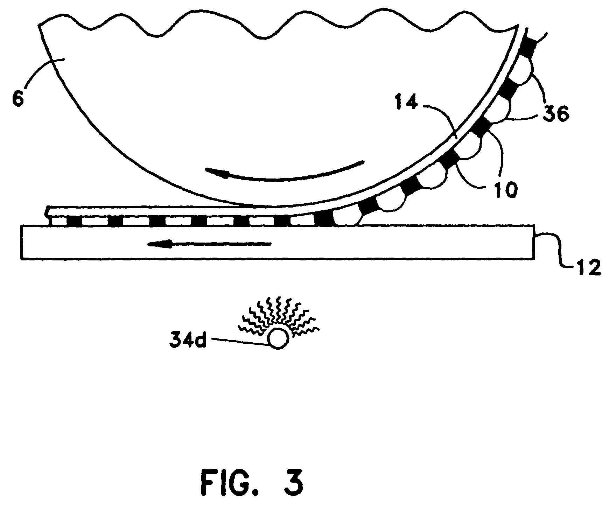

Fig. 3 illustrates the deposition of a black matrix pattern 10, color filter pattern 36, and transfer layer 14 composite from collector roll 6 to a glass substrate 12. Adhesion to the glass substrate is preferably provided by the color pixel inks, although adhesives could also be employed to facilitate transfer. The composite illustrated in Fig. 3 consists of black matrix pattern 10 formed using the method illustrated in Fig. 2, as well as the color ink cells 36 which comprise the color filter pattern. During deposition of the composite to the substrate, the ink cells 36 which comprise the red, green and blue color cells are preferably in a liquid or otherwise deformable state. Consequently, the ink cells are squeezed, during the deposition, between transfer layer 14 and glass substrate 12, and thereby deformed to a smoother, more uniform ink dot shape and thickness. This more uniform shape and thickness is retained, preferably by curing simultaneous with the transfer operation. Such curing can be accomplished via UV light 34d, which is positioned to emit radiation through the glass substrate.

During the deposition of the multicolored pattern to the substrate 12, the multicolor pattern tends to couple to the glass substrate 12. When this occurs, the cushioning layer 7 tends to flex and thereby alleviate any defects which might otherwise occur due to imperfections in the flatness of the substrate 12, inaccurate speed matching between the substrate and the collector 6, and so forth. Providing a higher modulus layer 8 outside of the cushioning layer 7 helps to achieve this coupling effect.

## Claims

1. A collector device for printing color filter patterns for flat panel displays, said collector device comprising a cushioning material and a layer of material having a higher modulus than said cushioning material over said cushioning material.

2. The collector of claim 1, wherein said cushioning material comprises an elastomeric material having a modulus of elasticity of less than 1000 psi, or less than 300 psi.

3. The collector of claim 1, wherein said higher modulus layer comprises a transparent material, or a polymeric material, or polyethylene terephthalate.

4. The collector of claim 1, wherein said higher modulus layer comprises a metal foil, or another transparent material.

5. The collector of claim 4, wherein said method foil or other reflective surface is disposed under said transparent material.

6. The collector of claim 1, wherein said higher modulus layer comprises a modulus of elasticity greater than 100,000, or a modulus of elasticity greater than 1,000,000.

7. The collector of claim 3, further comprising, on said higher modulus layer, a coating of a material having a hardness greater than 1 GPa.

8. The collector of claim 7, wherein said coating comprises a material selected from the group consisting of tin oxide, indium oxide, aluminum oxide, zirconium oxide, boron nitride, boron carbide, molybdenum disulfide, carbon nitride, silicon dioxide, diamond-like carbon (DLC) and mixtures thereof, or DLN.

9. The collector of claim 2, wherein said elastomeric layer comprises a material selected from the group consisting of butyl rubber, silicone, polysulfide, and polyurethane.

10. A method of forming an imaged pattern on an ink transfer device, comprising contacting an ink pattern with said ink transfer device, said transfer device comprising:
a cushioning material and a layer of material having a higher modulus than said cushioning material over said cushioning material.

11. The method of claim 10, further comprising curing said ink pattern during transfer to a substrate.

12. A method of forming an imaged pattern on an ink transfer device, comprising contacting an ink pattern having light blocking and non-light blocking regions thereon with said ink transfer device, said transfer device comprising:
a transparent material thereon, and a reflective surface under said transparent material and said method comprises:
curing said ink pattern by exposing said ink pattern to radiation, said radiation traveling through said non-light blocking regions through said transparent material, said radiation then being reflected from said reflective material back through said transparent material and into said ink pattern.
